# EUROPEAN PATENT SPECIFICATION

(11) **EP 3 674 867 B1**
(45) Date of publication and mention of the grant of the patent: **30.08.2023**
(21) Application number: 18867253.9
(22) Date of filing: 09.10.2018
(51) Int. Cl.: G06F 3/0481, G06F 3/0488, H04M 1/725

(54) **HUMAN-COMPUTER INTERACTION METHOD AND ELECTRONIC DEVICE**
VERFAHREN ZUR MENSCH-COMPUTER-INTERAKTION UND ELEKTRONISCHE VORRICHTUNG
PROCÉDÉ D'INTERACTION HOMME-ORDINATEUR ET DISPOSITIF ÉLECTRONIQUE

(30) Priority: 09.10.2017 CN 201710931737; 18.10.2017 CN 201710971543
(43) Date of publication of application: 01.07.2020
(73) Proprietor: Huawei Technologies Co., Ltd., Longgang District Shenzhen, Guangdong 518129 (CN)
(72) Inventor: NI, Jing, Shenzhen Guangdong 518129 (CN); QIAN, Kai, Shenzhen Guangdong 518129 (CN); YANG, Zhiyan, Shenzhen Guangdong 518129 (CN); HUANG, Liwei, Shenzhen Guangdong 518129 (CN); WU, Xin, Shenzhen Guangdong 518129 (CN); CHEN, Wenjie, Shenzhen Guangdong 518129 (CN); ZHOU, Shanru, Shenzhen Guangdong 518129 (CN); ZHOU, Xuan, Shenzhen Guangdong 518129 (CN)
(74) Representative: Gill Jennings & Every LLP
(86) International application number: PCT/CN2018/109478
(87) International publication number: WO 2019/072168

(56) References cited:
- EP-A1- 2 824 556
- EP-A1- 2 824 560
- CN-A- 105 183 304
- CN-A- 105 426 078
- CN-A- 106 293 472
- CN-A- 106 909 289
- US-A1- 2006 026 536
- US-A1- 2014 223 354
- US-A1- 2016 291 816

## Description

### TECHNICAL FIELD

This application relates to the communications field, and more specifically, to a man-machine interaction method and an electronic device in the communications field.

### BACKGROUND

With development of electronic devices such as smartphones and smart tablet devices, increasingly more users pursue electronic devices with narrow frames, to increase a screen utilization rate of the electronic devices. Therefore, if a navigation icon is displayed at a fixed position on a display, use of a navigation operation is not flexible enough, resulting in relatively low operation efficiency.

EP2824556 relates to customisable navigation menu in a mobile terminal. CN106293472 relates to virtual key processing method and mobile terminal. US2014223354 relates to method and system for creating floating keys in a portable device. EP2824560 relates to mobile terminal and controlling method thereof. US 2006/026536 relates to gestures for touch sensitive input devices.

### SUMMARY

Implementations of this application provide a man-machine interaction method and an electronic device, to improve navigation operation flexibility and operation efficiency.

The invention has been defined in the independent claims. Further specific technical features have been defined in the dependent claims.

According to a first aspect, a man-machine interaction method is provided according to claim 1.

Therefore, in the man-machine interaction method provided in this implementation of this application, when a user needs to display the navigation icon in the first area, the user inputs the navigation input operation into the first area, and the first navigation icon may be displayed at the preset position in the first area. When the user needs to display the navigation icon in the second area, the user inputs the navigation input operation into the second area, and a position of the navigation input operation detected in the second area is the position at which the second navigation icon is displayed. In other words, the position of the first navigation icon displayed in the first area is fixed, and the position of the second navigation icon displayed in the second area can be changed as required. In this way, navigation operation flexibility and operation efficiency can be improved.

Further, when the display displays the first navigation icon at the preset position in the first area, an icon of an application may be displayed in the first area except the preset position, which can improve the utilization rate of the display. The position of the navigation input operation in the second area is the position at which the second navigation icon is displayed. In this way, the second navigation icon can be displayed flexibly based on a requirement of the user. In addition, the first navigation icon and the second navigation icon are different, which can improve recognition of the navigation icon in displaying.

Optionally, the first navigation icon is a button, and the second navigation icon is a floating ball.

It should be understood that the first position may be any position in the second area.

Optionally, the first area may be referred to as a fixed display area of the first navigation icon, and the second area may be referred to as a moving display area of the second navigation icon. For example, the first area may be a lower part of the display, and the second area is an upper part of the display. The display includes the first area and the second area.

Optionally, the preset position in the first area may be set based on the requirement of the user. For example, when the user prefers to use a left hand, the preset position may be set on a left side of the first area, and when the user prefers to use a right hand, the preset position may be set on a right side of the first area.

It should be understood that, that the first navigation icon and the second navigation icon are different may be that a display form of the first navigation icon is different from a display form of the second navigation icon. For example, the display form may be a shape or a display effect. For example, the first navigation icon may be a rounded rectangle, and the second navigation icon may be a circle.

It should be understood that the display may be a pressure touch display, a floating touch display, or a common touch display.

In some implementations, the method further includes: in response to the detecting that the first navigation icon is moved from the first area to a second position in the second area, determining to display the second navigation icon at the second position.

In other words, when the navigation input operation moves from the first area to the second position in the second area, the display displays the second navigation icon at the second position in the second area. That is, when the first navigation icon is displayed in the first area, and the user needs to display the navigation icon in the second area, the user may move the navigation input operation from the first area to the second area. In this way, the display may display the second navigation icon in the second area, which can improve flexibility of displaying the navigation icon.

In some implementations, the method further includes: in response to the detecting that the second navigation icon is moved from the second area to the first area, determining to display the first navigation icon at the preset position in the first area.

In other words, when the navigation input operation moves from the second area to the first area, the display displays the first navigation icon at the preset position in the first area. That is, when the second navigation icon is displayed in the second area, and the user needs to display the navigation icon in the first area, the user may move the navigation input operation from the second area to the first area. In this way, the display may display the first navigation icon at the preset position in the first area, which can improve flexibility of displaying the navigation icon.

In some implementations, the method further includes: after the displaying a first navigation icon at a preset position in the first area, in response to detection of no navigation input operation in the first area within a first time period, determining not to display the first navigation icon in the first area.

In some implementations, the method further includes: after the displaying a second navigation icon at the first position, in response to detection of no navigation input operation in the second area within a first time period, determining not to display the second navigation icon in the second area.

Specifically, after the display displays the second navigation icon in the second area, if there is no navigation input operation within the preset first time period, the second navigation icon may be hidden. In this way, the position of the second navigation icon on the display may display an icon of another application, thereby further improving the utilization rate of the display.

In some implementations, the first software program is at least one of the following: a software program for returning to a previous-level menu, a software program for entering a multi-task, or a software program for entering a home screen. Optionally, the first software program may further include a software program of a voice assistant or the like.

In some implementations, a navigation input operation corresponding to the software program for returning to a previous-level menu is different from a navigation input operation corresponding to the software program for entering a multi-task, and the navigation input operation corresponding to the software program for entering a multi-task is different from a navigation input operation corresponding to the software program for entering a home screen.

In other words, the user performs different operations on a navigation icon to enter different navigation functions. In this way, different navigation functions do not need different icons, thereby avoiding occupation of the display.

In some implementations, the navigation input operation is a floating touch operation. Optionally, the navigation input operation may alternatively be a pressure touch operation.

In some implementations, the method further includes: in response to the detecting, in the first area, that a distance between the navigation input operation and the display is a first distance, determining to display the first navigation icon of a first characteristic at the preset position in the first area, and in response to the detecting, in the first area, that a distance between the navigation data operation and the display is a second distance, determining to display the first navigation icon of a second characteristic at the preset position in the first area. The first distance is different from the second distance. The first characteristic is different from the second characteristic. The first characteristic and the second characteristic include at least one of luminance, lightness, and contrast.

In some implementations, the method further includes: in response to the detecting, at a third position in the second area, that the distance between the navigation input operation and the display is a third distance, determining to display the second navigation icon of a third characteristic at the third position, and in response to the detecting, at the third position in the second area, that the distance between the navigation data operation and the display is a fourth distance, determining to display the second navigation icon of a fourth characteristic at the third position. The third distance is different from the fourth distance. The third characteristic is different from the fourth characteristic. The third characteristic and the fourth characteristic include at least one of luminance, lightness, and contrast.

According to a second aspect, an electronic apparatus is provided. The electronic device comprises a display, wherein the display comprises a display screen; one or more processors; one or more memories; a plurality of applications; and one or more programs, wherein the one or more programs are stored in the one or more memories and configured to be executed by the one or more processors, and the one or more programs comprise a set of instructions, which when executed by the one or more processors, causes the apparatus to perform the method according to any one of the first aspect or any possible implementation of the first aspect.

According to a third aspect, a computer readable storage medium is provided, and includes an instruction. When the instruction is run on an electronic device according to the second aspect, the electronic device is enabled to perform the method according to the first aspect or any possible implementation of the first aspect.

According to a fourth aspect, this application provides a computer program product including an instruction. When the computer product is run on an electronic device according to the second aspect, the electronic device is enabled to perform the method according to the first aspect or any possible implementation of the first aspect.

### BRIEF DESCRIPTION OF DRAWINGS

FIG. 1 is a schematic diagram of a navigation icon in the prior art;
FIG. 2 is a schematic diagram of a man-machine interaction method according to an implementation of this application;
FIG. 3 is a schematic diagram of a display according to an implementation of this application;
FIG. 4 is a schematic diagram of another display according to an implementation of this application;
FIG. 5 is a schematic diagram of still another display according to an implementation of this application;
FIG. 6 is a schematic diagram of a navigation input operation movement according to an implementation of this application;
FIG. 7 is a schematic diagram of another navigation input operation movement according to an implementation of this application;
FIG. 8 is a schematic block diagram of an electronic device according to an implementation of this application; and
FIG. 9 is a schematic diagram of a mobile phone according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

The technical solutions in the implementations of this application may be applied to all electronic devices having a display. For example, an electronic device may be a mobile phone, a tablet personal computer (tablet personal computer), a media player, a smart television, a laptop computer (laptop computer), a personal digital assistant (personal digital assistant, PDA), a personal computer (personal computer), a mobile internet device (mobile internet device), or a wearable device (wearable device) such as a smartwatch, or the like that has a display. This is not limited in the implementations of this application. The following describes the technical solutions of this application with reference to accompanying drawings.

It should be understood that the implementations of this application may be applied to a pressure touch technology, a floating touch technology, or a common touch technology.

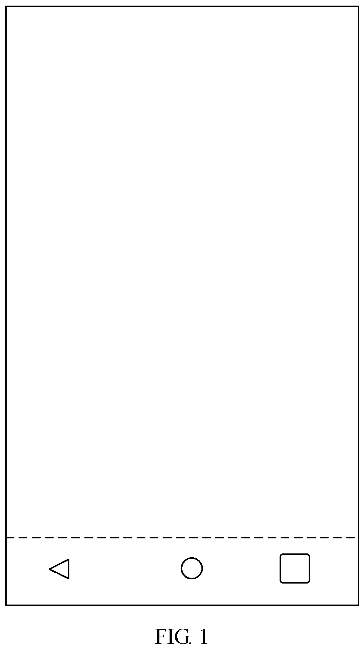

FIG. 1 is a schematic diagram of a navigation icon in the prior art. In the prior art, three navigation icons are displayed in a fixed area, and are an icon for returning to a previous-level menu, an icon for entering a home screen, and an icon for entering a multi-task. The navigation icons occupy a specific area when displayed in a fixed area of a display. Consequently, another application icon cannot be displayed in the fixed area, resulting in a relatively low utilization rate of the display. In addition, the navigation icons are fixed at a bottom of the display, and cannot be set based on a requirement of a user, resulting in poor flexibility. Therefore, a man-machine interaction method is provided in the implementations of this application, and the user can flexibly change a display position of the navigation icon based on the requirement of the user by setting a fixed area (a first area) and a movable area (a second area). With reference to the accompanying drawings, the following describes the man-machine interaction method provided in the implementations of this application.

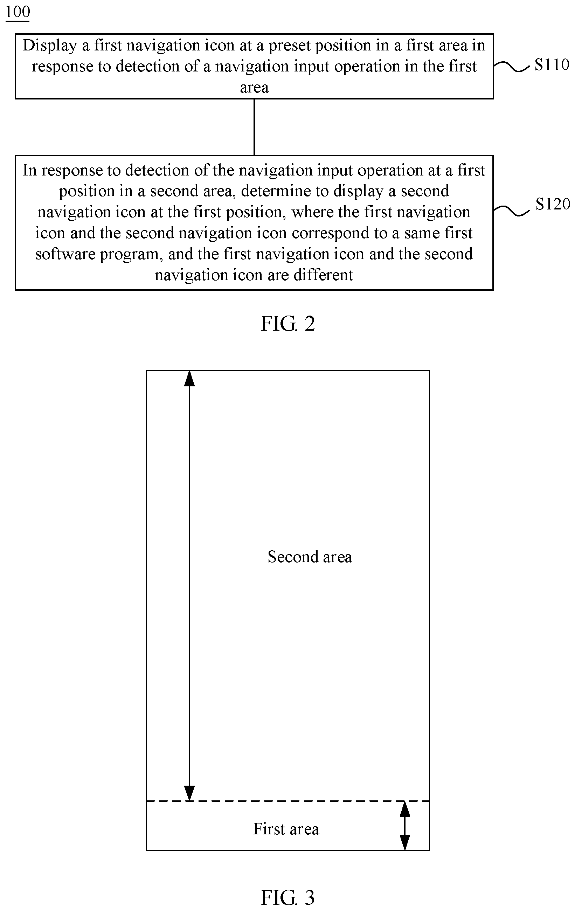

FIG. 2 shows a schematic diagram of a man-machine interaction method 100 according to an implementation of this application. The method 100 is applied to an electronic device having a display. The electronic device includes a sensor for detecting a navigation input operation on the display. The display includes a first area and a second area that are not overlapped. For example, FIG. 3 schematically shows that the display includes the first area and the second area. The first area may be referred to as a fixed display area of a first navigation icon, and the second area may be referred to as a moving display area of a second navigation icon. The method includes the following steps.

S 110. Display the first navigation icon at a preset position in the first area in response to detection of the navigation input operation in the first area. Optionally, the navigation input operation is a floating touch operation, a pressure touch operation, or the like. This is not limited in this implementation of this application.

Optionally, the first navigation icon is a button.

It should be understood that a position of the navigation input operation may be a last position of the navigation input operation. For example, in the second area, when the navigation input operation moves from a first position to a second position, the second position is the position of the navigation input operation. This is not limited in this implementation of this application. In addition, the navigation input operation is a globally valid operation, that is, the navigation input operation is valid on any interface. Regardless of on a home screen (home screens) or a running interface of any application (application, APP) or Widget, a navigation key may be invoked by using a preset navigation input operation.

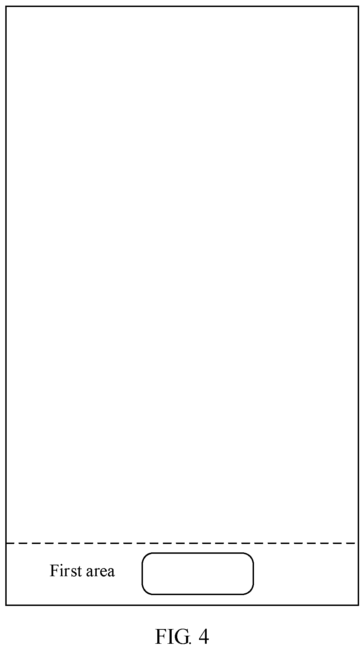

For example, as shown in FIG. 4, a position of a rounded rectangle in the first area may be referred to as the preset position. For example, the navigation input operation is within the first area except the rounded rectangle in FIG. 4, and the display still displays the first navigation icon in the rounded rectangle in FIG. 4. In FIG. 4, an icon of another application may be displayed at another position in the first area except the rounded rectangle, which can improve a utilization rate of the display. Further, the preset position may be set at any position in the first area based on the requirement of the user. For example, when the user prefers to use a left hand, the preset position may be set on a left side of the first area. For another example, when the user prefers to use a right hand, the preset position may be set on a right side of the first area.

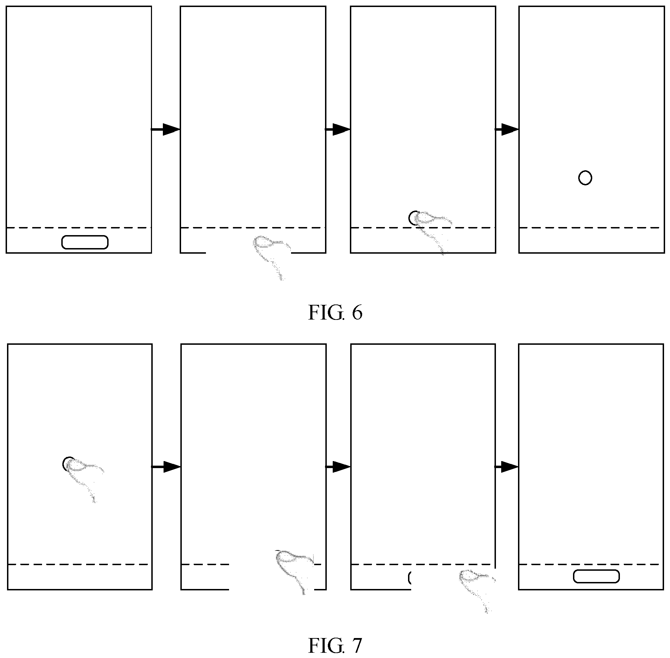

In an optional implementation, the method 100 further includes: in response to the detecting that the first navigation icon is moved from the first area to a second position in the second area, determining to display the second navigation icon at the second position. For example, as shown in FIG. 6, when the sensor detects that the first navigation icon gradually moves from the first area to the second area, the display displays the second navigation icon at a current position in the second area.

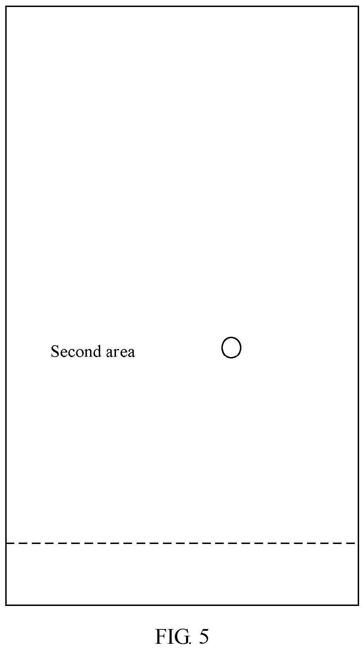

S 120. In response to detection of the navigation input operation at a first position in the second area, determine to display the second navigation icon at the first position. The first navigation icon and the second navigation icon correspond to a same first software program, and the first navigation icon and the second navigation icon are different. For example, as shown in FIG. 5, when the navigation input operation is detected at a position of a circle in the second area, it is determined to display the second navigation icon at the position of the circle. That the first navigation icon and the second navigation icon are different may be that a display form of the first navigation icon is different from a display form of the second navigation icon. For example, the display form may be a shape or a display effect. For example, the first navigation icon may be the rounded rectangle shown in FIG. 4, and the second navigation icon may be the circle shown in FIG. 5.

Optionally, the second navigation icon is a floating ball.

Optionally, the first navigation icon may be a virtual button (button), an operation bar (bar), a floating ball, or the like. The second navigation icon is a virtual button, an operation bar, or the like. The first navigation icon and the second navigation icon are different.

In an optional implementation, the first software program may be a software program for returning to a previous-level menu, or may be a software program for entering a multi-task, or may be a software program for entering a home screen, or may be a software program for returning to a previous-level menu and a software program for entering a multi-task, or may be a software program for entering a multi-task and a software program for entering a home screen, or may be a software program for entering a home screen and a software program for returning to a previous-level menu, or may be a software program for returning to a previous-level menu, a software program for entering a multi-task, and a software program for entering a home screen. Certainly, the first software program may be a software program for entering a voice assistant, and the like. This is not limited in this implementation of this application. That is, in this implementation of this application, the first navigation icon may correspond to three conventional navigation icons (an icon for returning to a previous-level menu, an icon for entering a multi-task, and an icon for entering a home screen), which can improve the utilization rate of the display. Optionally, a navigation input operation corresponding to the software program for returning to a previous-level menu is different from a navigation input operation corresponding to the software program for entering a multi-task, and the navigation input operation corresponding to the software program for entering a multi-task is different from a navigation input operation corresponding to the software program for entering a home screen. For example, for a mobile phone with pressure sensitivity, touching means returning to a previous-level menu, pressing means entering a home screen, sliding up from a bottom edge means entering a multi-task, and pressing and holding a navigation button means enabling a voice assistant. For another example, touching means returning to a previous-level menu, touching and holding means entering a home screen, sliding leftward or rightward means entering a multi-task, and touching and holding and sliding upward means enabling a voice assistant. This is not limited in this implementation of this application, and may be set based on a requirement of the user.

In an optional implementation, the method 100 further includes: in response to the detecting that the navigation input operation is moved from the second area to the first area, determining to display the first navigation icon at the preset position in the first area. For example, as shown in FIG. 7, when it is detected that the navigation input operation moves from the second area to the first area, regardless of which position in the first area, the first navigation icon is displayed at the preset position in the first area.

In an optional implementation, the method further includes: after the displaying the first navigation icon at the preset position in the first area, in response to detection of no navigation input operation in the first area within a first time period, determining not to display the first navigation icon in the first area. That is, when there is no navigation input operation, the first navigation icon is not to be displayed within a specific time period, which can improve the utilization rate of the display.

In an optional implementation, the method further includes: after the displaying the second navigation icon at the first position, in response to detection of no navigation input operation in the second area within a second time period, determining not to display the second navigation icon in the second area. That is, when there is no navigation input operation, the second navigation icon is not to be displayed within a specific time period, which can improve the utilization rate of the display.

In an optional implementation, in response to the detecting, in the first area, that a distance between the navigation input operation and the display is a first distance, it is determined to display the first navigation icon of a first characteristic at the preset position in the first area. In response to the detecting, in the first area, that a distance between the navigation data operation and the display is a second distance, it is determined to display the first navigation icon of a second characteristic at the preset position in the first area. The first distance is different from the second distance. The first characteristic is different from the second characteristic. The first characteristic and the second characteristic include at least one of luminance, lightness, and contrast. Certainly, the first characteristic and the second characteristic of this application are not limited thereto, and may further include another display characteristic.

In an optional implementation, in response to the detecting, at a third position in the second area, that the distance between the navigation input operation and the display is a third distance, it is determined to display the second navigation icon of a third characteristic at the third position. In response to the detecting, at the third position in the second area, that the distance between the navigation data operation and the display is a fourth distance, it is determined to display the second navigation icon of a fourth characteristic at the third position. The third distance is different from the fourth distance. The third characteristic is different from the fourth characteristic. The third characteristic and the fourth characteristic include at least one of luminance, lightness, and contrast. Certainly, the third characteristic and the fourth characteristic of this application are not limited thereto, and may further include another display characteristic.

Specifically, for the floating touch operation, if the sensor detects that distances between the navigation input operation and the display are different, it is determined to display navigation icons of different characteristics. In this way, the user can perceive that the sensor can detect the navigation input operation. For example, different distances between the navigation input operation and the display correspond to different luminance, different distances between the navigation input operation and the display correspond to different lightness, and different distances between the navigation input operation and the display correspond to different contrast.

For example, when the sensor detects no finger or palm above the display, the display is completely transparent and does not display any navigation icon. When the sensor detects a finger above the display, the display has a relatively high transparency and vaguely displays a navigation icon. When the sensor detects that a finger or a palm above the display moves toward the display, the transparency of the display gradually becomes lower, and the navigation icon becomes clearer. When the sensor detects that a finger or a palm above the display leaves the display, the transparency of the display gradually increases, and the navigation icon becomes fuzzier. When the sensor detects that a distance from a finger or a palm to the display is less than a preset value, the display is completely opaque, and a clear navigation icon is displayed.

Therefore, in the man-machine interaction method provided in this implementation of this application, when the user needs to display the navigation icon in the first area, the user inputs the navigation input operation into the first area, and the first navigation icon may be displayed at the preset position in the first area. When the user needs to display the navigation icon in the second area, the user inputs the navigation input operation into the second area, and a position of the navigation input operation detected in the second area is the position at which the second navigation icon is displayed. In other words, the position of the first navigation icon displayed in the first area is fixed, and the position of the second navigation icon displayed in the second area can be changed as required. In this way, navigation operation flexibility and operation efficiency can be improved.

Further, when the display displays the first navigation icon at the preset position in the first area, an icon of an application may be displayed in the first area except the preset position, which can improve the utilization rate of the display. The position of the navigation input operation in the second area is the position at which the second navigation icon is displayed. In this way, the second navigation icon can be displayed flexibly based on a requirement of the user. In addition, the first navigation icon and the second navigation icon are different, which can improve recognition of the navigation icon in displaying.

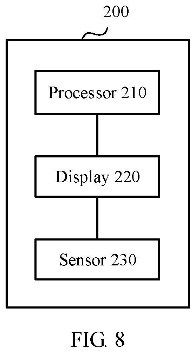

FIG. 8 shows an electronic device 200 according to an implementation of this application. The electronic device includes a processor 210, a display 220, and a sensor 230 for detecting a navigation input operation on the display 220. There may be one or more processors 210. There may be one or more sensors 230. The display 220 includes a first area and a second area that are not overlapped.

The sensor 230 is configured to detect a navigation input operation that acts on the first area and the second area.

The display 220 is configured to display content according to an instruction of the processor.

The processor 230 is configured to: determine to display the first navigation icon at a preset position in the first area in response to detection of the navigation input operation in the first area; determine to display the second navigation icon at a first position in the second area in response to detection of the navigation input operation at the first position; and instruct the display to display determined content. The first navigation icon and the second navigation icon correspond to a same first software program, and the first navigation icon and the second navigation icon are different.

In an optional implementation, the first navigation icon is a button, and the second navigation icon is a floating ball.

In an optional implementation, the processor 210 is further configured to: in response to the detecting that the first navigation icon is moved from the first area to a second position in the second area, determine to display the second navigation icon at the second position.

In an optional implementation, the processor 210 is further configured to: in response to the detecting that the second navigation icon is moved from the second area to the first area, determine to display the first navigation icon at the preset position in the first area.

In an optional implementation, the processor 210 is further configured to:
after determining to display the first navigation icon at the preset position in the first area, in response to detection of no navigation input operation in the first area within a first time period, determine not to display the first navigation icon in the first area; and
after determining to display the second navigation icon at the first position, in response to detection of no navigation input operation in the second area within a second time period, determine not to display the second navigation icon in the second area.

In an optional implementation, the first software program is at least one of the following: a software program for returning to a previous-level menu, a software program for entering a multi-task, or a software program for entering a home screen.

In an optional implementation, the navigation input operation is a floating touch operation.

In an optional implementation, the processor 210 is further configured to:
in response to the detecting, in the first area, that a distance between the navigation input operation and the display is a first distance, determine to display the first navigation icon of a first characteristic at the preset position in the first area; and
in response to the detecting, in the first area, that a distance between the navigation data operation and the display is a second distance, determine to display the first navigation icon of a second characteristic at the preset position in the first area, where the first distance is different from the second distance, the first characteristic is different from the second characteristic, and the first characteristic and the second characteristic include at least one of luminance, lightness, and contrast.

It should be understood that, in this application, the processor 210 may be independent of the display 220. Alternatively, the processor 210 may be disposed in the display 220. A relationship between the processor 210 and the display 220 is not limited in this implementation of this application.

In this implementation of this application, the sensor 230 may be a resistive sensor, a capacitive sensor, an inductive sensor, or the like. There may be one or more sensors 230. The sensor 230 may be deployed at one or more positions in the electronic device 200, for example, deployed at a lower part of or around the display 220. The sensor 230 may be configured to detect pressure at at least one position on an outer surface of the electronic device 200. For example, when a user performs a touch operation, such as touching, sliding, or a specific gesture, on an icon on the display 220, the sensor 230 may sense a change, which is caused by the touch operation of the user, of a circuit parameter such as a resistance, a capacitance, or an inductance. Optionally, the sensor 230 may send related information about the change of the circuit parameter to the processor 210, and the processor 210 may determine a touch value based on the related information about the change of the circuit parameter.

In an optional implementation, the electronic device 200 may further include a memory that may be configured to store a software program or a module. In this case, the processor 210 may run or execute the software program and/or the module stored in the memory, and invoke data stored in the memory, so as to implement various functions of the electronic device and/or process data. Optionally, the processor 210 may include an integrated circuit (integrated circuit, IC), for example, may include a separate packaged IC, or may include a plurality of connected packaged ICs that have same or different functions. The processor 210 may be a central processing unit (central processing unit, CPU), the processor 210 may further be another general purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component, or the like. The general purpose processor may be a microprocessor. Alternatively, the processor may be any conventional processor. This is not limited in this implementation of the present application.

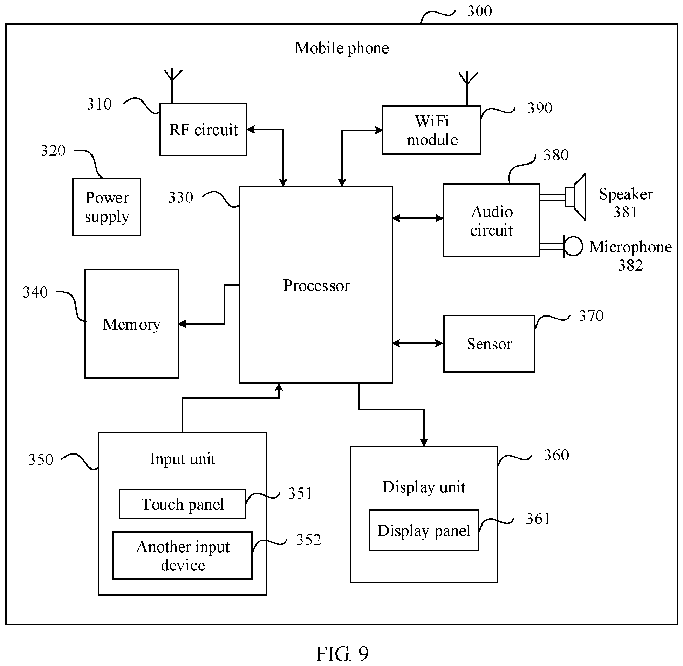

FIG. 9 is a schematic block diagram of an electronic device according to an implementation of this application. For example, the electronic device is a mobile phone. FIG. 9 is a block diagram of a partial structure of a mobile phone 300 related to this implementation of this application. Referring to FIG. 9, the mobile phone 300 includes components such as a radio frequency (radio frequency, RF) circuit 310, a power supply 320, a processor 330, a memory 340, an input unit 350, a display unit 360, a sensor 370, an audio circuit 380, and a wireless fidelity (wireless fidelity, Wi-Fi) module 390. A person skilled in the art may understand that a structure of the mobile phone shown in FIG. 9 does not constitute a limitation on the mobile phone. The mobile phone may include more or fewer components than those shown in the figure, combine some components, or have different component arrangements.

The following describes all components of the mobile phone 100 in detail with reference to FIG. 9.

The RF circuit 310 may be configured to receive and send a signal in a process of sending and receiving information or making a call. Particularly, after receiving downlink information from a base station, the RF circuit 310 sends the downlink information to the processor 330 (the processor may be the processor 210) for processing. In addition, the RF circuit 310 sends uplink data to the base station. The RF circuit usually includes but is not limited to an antenna, at least one amplifier, a transceiver, a coupler, a low noise amplifier (low noise amplifier, LNA), a duplexer, and the like. In addition, the RF circuit 310 may further communicate with a network and another device by using wireless communication. The wireless communication may use any communication standard or protocol, including but not limited to a global system for mobile communications (global system for mobile communication, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (short message service, SMS), and the like.

The memory 340 may be configured to store a software program and a module. The processor 330 runs the software program and the module stored in the memory 340, to perform various function applications of the mobile phone 300 and to process data. The memory 340 may mainly include a program storage area and a data storage area. The program storage area may store an operating system, an application required by at least one function (such as a sound playing function or an image playing function), and the like. The data storage area may store data (such as audio data or an address book) created according to use of the mobile phone 300, and the like. In addition, the memory 340 may include a high-speed random access memory, and may further include a nonvolatile memory, for example, at least one magnetic disk storage device, a flash storage device, or another volatile solid-state storage device.

The input unit 350 may be configured to: receive input digital or character information and generate key signal input related to a user setting and function control of the mobile phone 300. Specifically, the input unit 350 may include a touch panel 351 and another input device 352. The touch panel 351, also referred to as a touchscreen, may collect a touch operation of the user on or near the touch panel 351 (such as an operation of the user on or near the touch panel 351 by using any suitable object or accessory such as a finger or a stylus), and drive a corresponding connection apparatus according to a preset program. Optionally, the touch panel 351 may include two parts: a touch detection apparatus and a touch controller. The touch detection apparatus detects a touch location of the user, detects a signal brought by a touch operation, and transfers the signal to the touch controller. The touch controller receives touch information from the touch detection apparatus and converts the touch information into touch point coordinates, and then sends the touch point coordinates to the processor 330, and the touch controller can receive and execute a command sent by the processor 330. In addition, the touch panel 351 may be of a resistive type, a capacitive type, an infrared type, a surface acoustic wave type, or the like. In addition to the touch panel 351, the input unit 350 may further include another input device 352. Specifically, the another input device 352 may include, but is not limited to, one or more of a physical keyboard, a function key (such as a volume control key or an on/off key), a trackball, a mouse, or a joystick.

The display unit 360 may be configured to display information input by the user or information provided for the user, and various menus of the mobile phone 300. For example, the display unit 360 may be the display 220. The display unit 360 may include a display panel 361. Optionally, the display panel 361 may be configured in a form of an LCD, an OLED, or the like. Further, the touch panel 351 may cover the display panel 361. After detecting a touch operation on or near the touch panel 351, the touch panel 351 transfers the touch operation to the processor 330, to determine a type of a touch event. Subsequently, the processor 330 provides a corresponding visual output on the display panel 361 based on the type of the touch event. Although the touch panel 351 and the display panel 351 in FIG. 9 are used as two separate parts to implement input and output functions of the mobile phone 300, in some implementations, the touch panel 351 and the display panel 361 may be integrated to implement the input and output functions of the mobile phone 300.

The mobile phone 300 may further include at least one sensor 370. For example, the sensor 370 may be the sensor 230, such as an optical sensor, a motion sensor, or another sensor. Specifically, the optical sensor may include an ambient light sensor and a proximity sensor. The ambient light sensor may adjust luminance of the display panel 361 based on brightness of ambient light. The proximity sensor may turn off the display panel 361 and/or backlight when the mobile phone 300 moves to an ear. As a type of motion sensor, an accelerometer sensor may detect a value of an acceleration in each direction (generally, three axes), may detect a value and a direction of gravity in a static state, and may be used in an application for identifying a mobile phone posture (such as screen switching between a landscape mode and a portrait mode, a related game, or magnetometer posture calibration), a function related to vibration recognition (such as a pedometer or a knock), and the like. Other sensors such as a gyroscope, a barometer, a hygrometer, a thermometer, and an infrared sensor may also be disposed in the mobile phone 300. Details are not described herein.

The audio circuit 380, a speaker 381, and a microphone 382 may provide audio interfaces between the user and the mobile phone 300. The audio circuit 380 may convert received audio data into an electrical signal and transmit the electrical signal to the speaker 381, and the speaker 381 converts the electrical signal into a sound signal for output. In addition, the microphone 382 converts a collected sound signal into an electrical signal, and the audio circuit 380 receives the electrical signal, converts the electrical signal into audio data, and then outputs the audio data to the RF circuit 310, to send the audio data to, for example, another mobile phone, or outputs the audio data to the memory 340 for further processing.

WiFi belongs to a short-distance wireless transmission technology. The mobile phone 300 may help, by using the WiFi module 390, the user receive and send an email, browse a web page, access streaming media, and the like. The WiFi module 390 provides wireless broadband Internet access for the user. Although FIG. 9 shows the WiFi module 390, it can be understood that the WiFi module 390 is not a mandatory part of the mobile phone 300 and may be omitted as required provided that the essence of the present application is not changed.

The processor 330 is a control center of the mobile phone 300, connects all parts of the entire mobile phone by using various interfaces and lines, and performs various functions of the mobile phone 300 and data processing by running or executing the software program and/or the module that are/is stored in the memory 340 and by invoking data stored in the memory 340, to implement a plurality of services that are based on the mobile phone. Optionally, the processor 330 may include one or more processing units. Optionally, an application processor and a modem processor may be integrated into the processor 330. The application processor mainly processes an operating system, a user interface, an application, and the like. The modem processor mainly processes wireless communication. It may be understood that, alternatively, the modem processor may not be integrated into the processor 330.

The mobile phone 300 further includes the power supply 320 (for example, a battery) that supplies power to each component. Preferably, the power supply may be logically connected to the processor 330 by using a power management system, to implement functions such as charging management, discharging management, and power consumption management by using the power management system.

Although not shown, the mobile phone 300 may further include a camera, a Bluetooth module, and the like. Details are not described herein.

A person of ordinary skill in the art may be aware that, in combination with the examples described in the implementations disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method implementations, and details are not described herein again.

In the several implementations provided in this application, it should be understood that the disclosed system, apparatus, and method may be implemented in other manners. For example, the described apparatus implementation is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of the implementations.

In addition, functional units in the implementations of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the implementations of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The scope of protection shall be defined by the appended claims.

## Claims

1. A man-machine interaction method, wherein the method is applied to an electronic device having a display, the electronic device comprises a sensor for detecting a navigation input operation on the display, and the display comprises a first area and a second area that are not overlapped; and the method comprises:
detecting a navigation input operation on the display;
when the navigation input operation is detected in the first area, displaying (S110) a first navigation icon at a preset position in the first area; and
when the navigation input operation is detected at a first position in the second area, displaying (S120) a second navigation icon at the first position in the second area;
wherein the first navigation icon and the second navigation icon correspond to a same first software program, and the first navigation icon and the second navigation icon are different.

2. The method according to claim 1, wherein the first navigation icon is a button, and the second navigation icon is a floating ball.

3. The method according to claim 1 or 2, wherein the method further comprises:
in response to the detecting that the first navigation icon is moved from the first area to a second position in the second area, determining to display the second navigation icon at the second position.

4. The method according to any one of claims 1 to 3, wherein the method further comprises:
in response to the detecting that the second navigation icon is moved from the second area to the first area, determining to display the first navigation icon at the preset position in the first area.

5. The method according to any one of claims 1 to 4, wherein the method further comprises:
after the displaying a first navigation icon at a preset position in the first area, in response to detection of no navigation input operation in the first area within a first time period, determining not to display the first navigation icon in the first area; and
after the displaying a second navigation icon at the first position, in response to detection of no navigation input operation in the second area within a second time period, determining not to display the second navigation icon in the second area.

6. The method according to any one of claims 1 to 5, wherein the first software program is at least one of the following: a software program for returning to a previous-level menu, a software program for entering a multi-task, or a software program for entering a home screen.

7. The method according to any one of claims 1 to 6, wherein the navigation input operation is a floating touch operation.

8. The method according to any one of claims 1 to 7, wherein the method further comprises:
in response to the detecting, in the first area, that a distance between the navigation input operation and the display is a first distance, determining to display the first navigation icon of a first characteristic at the preset position in the first area; and
in response to the detecting, in the first area, that a distance between the navigation data operation and the display is a second distance, determining to display the first navigation icon of a second characteristic at the preset position in the first area, wherein the first distance is different from the second distance, the first characteristic is different from the second characteristic, and the first characteristic and the second characteristic comprise at least one of luminance, lightness, and contrast.

9. An electronic device, comprising:
a display (360), wherein the display comprises a display screen (361);
a sensor for detecting a navigation input operation on the display;
one or more processors (330);
one or more memories (340);
a plurality of applications; and
one or more programs, wherein the one or more programs are stored in the one or more memories and configured to be executed by the one or more processors, and the one or more programs comprise a set of instructions, which when executed by the one or more processors, causes the electronic device to perform the method according to any one of claims 1 to 8.

10. A computer readable storage medium, comprising a set of instructions, wherein when the set of instructions is run on an electronic device according to claim 9, the electronic device is enabled to perform the method according to any one of claims 1 to 8.

11. A computer program product comprising a set of instructions which, when the computer program product is run on an electronic device according to claim 9, enable the electronic device to perform the method according to any one of claims 1 to 8.

## Patentansprüche

1. Mensch-Maschine-Interaktionsverfahren, wobei das Verfahren auf eine elektronische Vorrichtung angewendet wird, die eine Anzeigevorrichtung aufweist, die elektronische Vorrichtung einen Sensor zur Erkennung einer Navigationseingabeoperation auf der Anzeigevorrichtung umfasst und die Anzeigevorrichtung einen ersten Bereich und einen zweiten Bereich umfasst, die nicht überlappend sind, und das Verfahren umfasst:
Erkennen einer Navigationseingabeoperation auf der Anzeigevorrichtung;
wenn die Navigationseingabeoperation in dem ersten Bereich erkannt wird, Anzeigen (S110) eines ersten Navigationssymbols an einer voreingestellten Position in dem ersten Bereich; und
wenn die Navigationseingabeoperation an einer ersten Position in dem zweiten Bereich erkannt wird, Anzeigen (S120) eines zweiten Navigationssymbols an der ersten Position in dem zweiten Bereich;
wobei das erste Navigationssymbol und das zweite Navigationssymbol einem gleichen ersten Softwareprogramm entsprechen und das erste Navigationssymbol und das zweite Navigationssymbol sich unterscheiden.

2. Verfahren nach Anspruch 1, wobei das erste Navigationssymbol eine Schaltfläche ist und das zweite Navigationssymbol ein schwebender Ball ist.

3. Verfahren nach Anspruch 1 oder 2, wobei das Verfahren ferner umfasst:
in Reaktion auf das Erkennen, dass das erste Navigationssymbol von dem ersten Bereich auf eine zweite Position in dem zweiten Bereich bewegt wird, das Bestimmen, das zweite Navigationssymbol an der zweiten Position anzuzeigen.

4. Verfahren nach einem der Ansprüche 1 bis 3, wobei das Verfahren ferner umfasst:
in Reaktion auf das Erkennen, dass das zweite Navigationssymbol von dem zweiten Bereich in dem ersten Bereich bewegt wird, das Bestimmen, das erste Navigationssymbol an der voreingestellten Position in dem ersten Bereich anzuzeigen.

5. Verfahren nach einem der Ansprüche 1 bis 4, wobei das Verfahren ferner umfasst:
nach dem Anzeigen eines ersten Navigationssymbols an einer voreingestellten Position in dem ersten Bereich, in Reaktion auf das Erkennen keiner Navigationseingabeoperation in dem ersten Bereich innerhalb eines ersten Zeitraums, das Bestimmen, kein erstes Navigationssymbol in dem ersten Bereich anzuzeigen; und nach dem Anzeigen eines zweiten Navigationssymbols an der ersten Position, in Reaktion auf das Erkennen keiner Navigationseingabeoperation in dem zweiten Bereich innerhalb eines zweiten Zeitraums, das Bestimmen, kein zweites Navigationssymbol in dem zweiten Bereich anzuzeigen.

6. Verfahren nach einem der Ansprüche 1 bis 5, wobei das erste Softwareprogramm mindestens eines der folgenden ist: ein Softwareprogramm zum Zurückkehren zu einem Menü der vorherigen Ebene, ein Softwareprogramm zum Eingeben einer Mehrfachaufgabe oder ein Softwareprogramm zum Aufrufen eines Startbildschirms.

7. Verfahren nach einem der Ansprüche 1 bis 6, wobei die Navigationseingabeoperation eine schwebende Berührungsoperation ist.

8. Verfahren nach einem der Ansprüche 1 bis 7, wobei das Verfahren ferner umfasst:
in Reaktion auf das Erkennen, in dem ersten Bereich, dass eine Entfernung zwischen der Navigationseingabeoperation und der Anzeigevorrichtung eine erste Entfernung ist, das Bestimmen, das erste Navigationssymbol eines ersten Merkmals an der voreingestellten Position in dem ersten Bereich anzuzeigen; und
in Reaktion auf das Erkennen, in dem ersten Bereich, dass eine Entfernung zwischen der Navigationseingabeoperation und der Anzeigevorrichtung eine zweite Entfernung ist, das Bestimmen, das erste Navigationssymbol eines zweiten Merkmals an der voreingestellten Position in dem ersten Bereich anzuzeigen, wobei die erste Entfernung sich von der zweiten Entfernung unterscheidet, das erste Merkmal sich von dem zweiten Merkmal unterscheidet und das erste Merkmal und das zweite Merkmal mindestens eines von Leuchtdichte, Helligkeit oder Kontrast umfassen.

9. Elektronische Vorrichtung, umfassend:
eine Anzeigevorrichtung (360), wobei die Anzeigevorrichtung einen Anzeigebildschirm (361) umfasst;
einen Sensor zum Erkennen einer Navigationseingabeoperation auf der Anzeigevorrichtung;
einen oder mehrere Prozessoren (330);
einen oder mehrere Speicher (340);
eine Vielzahl von Anwendungen; und
eines oder mehrere Programme, wobei das eine oder die mehreren Programme in dem einen oder den mehreren Speichern gespeichert werden und konfiguriert sind, um von dem einen oder den mehreren Prozessoren ausgeführt zu werden, und die einen oder mehreren Programme einen Befehlssatz umfassen, der bei Ausführung durch den einen oder die mehreren Prozessoren die elektronische Vorrichtung veranlasst, das Verfahren nach einem der Ansprüche 1 bis 8 durchzuführen.

10. Computerlesbares Speichermedium, umfassend einen Befehlssatz, wobei wenn der Befehlssatz auf einer elektronischen Vorrichtung nach Anspruch 9 ausgeführt wird, die elektronische Vorrichtung aktiviert ist, um das Verfahren nach einem der Ansprüche 1 bis 8 durchzuführen.

11. Computerprogrammprodukt, umfassend einen Befehlssatz, der, wenn das Computerprogrammprodukt auf einer elektronischen Vorrichtung nach Anspruch 9 ausgeführt wird, die elektronische Vorrichtung aktiviert, um das Verfahren nach einem der Ansprüche 1 bis 8 durchzuführen.

## Revendications

1. Procédé d'interaction homme-machine, le procédé étant appliqué à un dispositif électronique équipé d'un dispositif d'affichage, le dispositif électronique comprenant un capteur servant à détecter une opération d'entrée de navigation sur le dispositif d'affichage, et le dispositif d'affichage comprenant une première zone et une deuxième zone qui ne se chevauchent pas ; et le procédé comprenant les étapes consistant à :
détecter une opération d'entrée de navigation sur le dispositif d'affichage ;
lorsque l'opération d'entrée de navigation est détectée dans la première zone, afficher (S110) une première icône de navigation à une position prédéfinie dans la première zone ; et
lorsque l'opération d'entrée de navigation est détectée à une première position dans la deuxième zone, afficher (S 120) une deuxième icône de navigation à la première position dans la deuxième zone ;
dans lequel la première icône de navigation et la deuxième icône de navigation correspondent à un même premier programme logiciel, et la première icône de navigation et la deuxième icône de navigation sont différentes.

2. Procédé selon la revendication 1, dans lequel la première icône de navigation est un bouton et la deuxième icône de navigation est une boule flottante.

3. Procédé selon la revendication 1 ou 2, le procédé comprenant également l'étape consistant à :
en réponse à la détection du fait que la première icône de navigation est déplacée de la première zone à une deuxième position dans la deuxième zone, décider d'afficher la deuxième icône de navigation à la deuxième position.

4. Procédé selon l'une quelconque des revendications 1 à 3, le procédé comprenant également l'étape consistant à :
en réponse à la détection du fait que la deuxième icône de navigation est déplacée de la deuxième zone vers la première zone, décider d'afficher la première icône de navigation à la position prédéfinie dans la première zone.

5. Procédé selon l'une quelconque des revendications 1 à 4, le procédé comprenant également les étapes consistant à :
après l'affichage d'une première icône de navigation à une position prédéfinie dans la première zone, en réponse à la détection de l'absence d'opération d'entrée de navigation dans la première zone au cours d'une première période de temps, décider de ne pas afficher la première icône de navigation dans la première zone ; et
après l'affichage d'une deuxième icône de navigation à la première position, en réponse à la détection de l'absence d'opération d'entrée de navigation dans la deuxième zone au cours d'une deuxième période de temps, décider de ne pas afficher la deuxième icône de navigation dans la deuxième zone.

6. Procédé selon l'une quelconque des revendications 1 à 5, dans lequel le premier programme logiciel est au moins l'un des suivants : un programme logiciel pour revenir à un menu de niveau précédent, un programme logiciel pour entrer dans une exécution multitâche, un programme logiciel pour entrer dans un écran d'accueil.

7. Procédé selon l'une quelconque des revendications 1 à 6, dans lequel l'opération d'entrée de navigation est une opération tactile flottante.

8. Procédé selon l'une quelconque des revendications 1 à 7, le procédé comprenant également les étapes consistant à :
en réponse à la détection, dans la première zone, du fait qu'une distance entre l'opération d'entrée de navigation et le dispositif d'affichage est une première distance, décider d'afficher la première icône de navigation d'une première caractéristique à la position prédéfinie dans la première zone ; et
en réponse à la détection, dans la première zone, du fait qu'une distance entre l'opération de données de navigation et le dispositif d'affichage est une deuxième distance, décider d'afficher la première icône de navigation d'une deuxième caractéristique à la position prédéfinie dans la première zone, la première distance étant différente de la deuxième distance, la première caractéristique étant différente de la deuxième caractéristique, et la première caractéristique et la deuxième caractéristique comprenant au moins un élément parmi la luminance, la luminosité et le contraste.

9. Dispositif électronique, comprenant :
un dispositif d'affichage (360), le dispositif d'affichage comprenant un écran d'affichage (361) ;
un capteur servant à détecter une opération d'entrée de navigation sur le dispositif d'affichage ;
un ou plusieurs processeurs (330) ;
une ou plusieurs mémoires (340) ;
une pluralité d'applications ; et
un ou plusieurs programmes, les un ou plusieurs programmes étant stockés dans les une ou plusieurs mémoires et configurés pour être exécutés par les un ou plusieurs processeurs, et les un ou plusieurs programmes comprenant un ensemble d'instructions qui, lorsqu'il est exécuté par les un ou plusieurs processeurs, amène le dispositif électronique à effectuer le procédé selon l'une quelconque des revendications 1 à 8.

10. Support de stockage lisible par ordinateur, comprenant un ensemble d'instructions, de telle sorte que lorsque l'ensemble d'instructions est exécuté sur un dispositif électronique selon la revendication 9, le dispositif électronique est activé pour effectuer le procédé selon l'une quelconque des revendications 1 à 8.

11. Produit-programme d'ordinateur comprenant un ensemble d'instructions qui, lorsque le produit-programme d'ordinateur est exécuté sur un dispositif électronique selon la revendication 9, active le dispositif électronique pour lui faire effectuer le procédé selon l'une quelconque des revendications 1 à 8.
